# EUROPÄISCHE PATENTSCHRIFT

(11) **EP 1 389 285 B1**
(45) Veröffentlichungstag und Bekanntmachung des Hinweises auf die Patenterteilung: **10.07.2013**
(21) Anmeldenummer: 02718137.9
(22) Anmeldetag: 15.02.2002
(51) Int. Cl.: F23G 5/48, F28F 19/06, F22B 37/04

(54) **BAUTEILE FÜR DEN KESSELBEREICH VON KRAFTWERKEN ODER MÜLLVERBRENNUNGSANLAGEN**
STRUCTURAL COMPONENTS FOR THE BOILER ZONE OF POWER PLANTS OR REFUSE INCINERATION PLANTS
COMPOSANTS DESTINÉS A LA ZONE CHAUDIÈRE DE CENTRALES ÉLECTRIQUES OU D'INSTALLATIONS D'INCINÉRATION D'ORDURES

(30) Priorität: 26.02.2001 DE 10109138
(43) Veröffentlichungstag der Anmeldung: 18.02.2004
(73) Patentinhaber: Ni-Ko-Tech System GmbH, 22359 Hamburg (DE); Baumgarte Boiler Systems GmbH, 33647 Bielefeld (DE)
(72) Erfinder: ANSEY, Johann, Wilhelm, 22359 Hamburg (DE)
(74) Vertreter: Stenger, Watzke & Ring
(86) Internationale Anmeldenummer: PCT/EP2002/001623
(87) Internationale Veröffentlichungsnummer: WO 2002/068863

(56) Entgegenhaltungen:
- EP-A- 0 085 135
- EP-A- 0 913 501
- US-A- 4 347 429
- US-A- 5 660 705

## Beschreibung

Die Erfindung betrifft Bauteile für den Kesselbereich von Kraftwerken oder Müllverbrennungsanlagen einschließlich Sondermüllverbrennungsanlagen, sowie solchen Anlagen, in denen korrosive, abrasive Beanspruchung u.ä. zur vorzeitigen Schädigung führen kann.

Da Verbrennungseinrichtungen wie Kraftwerke oder Müllverbrennungsanlagen immer nur im Verbund mit vor- und nachgeschalteten Einrichtungen wie Fördereinrichtungen, Wärmenutzung und Rauchgaswaschanlagen den Zweck erfüllen, ist für die Gesamtverfügbarkeit die Betriebsbereitschaft aller Einzelkomponenten ausschlaggebend. Bei der Verbrennung fester Brennstoffe oder fester Industrie- oder Sonderabfälle sowie Hausmüll bestehen derartige Anlagen in der Regel aus Aufgabesystemen für die festen Brennstoffe, einem Ofen in Form von Drehrohr- bzw. Schachtöfen, ggf. einer Nachbrennkammer, einem Dampfkessel zur Abhitzeverwertung, einer Rauchgaswäsche und dem Kamin. Die Verbrennungstemperaturen im Ofen liegen zwischen etwa 800 bis 1200°C bei einer Verweildauer von bis zu einer Stunde für das Verbrennungsgut. Die entstehenden Rauchgase müssen vom Brennraum über die Kesselzüge hin zu den Entstaubungsanlagen abgekühlt werden, wobei die durchlaufende Temperaturdifferenz bis zu 800°C betragen kann. Da Rauchgas als Rohgas bis über 10000 mg/m³ Staub im Rohgas und immer noch bis 100 mg/m³ Staub im Reingas enthalten kann, läßt es sich nicht vermeiden, daß im mittleren Temperaturbereich ein Absetzen dieser Rauchgasbestandteile an den wasser- oder dampfführenden Wärmeträgersystem wie Rohren, Rohrbündeln, Flossenwänden usw. erfolgt. Die Staubkomponenten verbacken zu steinartigen Überzügen auf den aus Stahl bzw. Stahllegierungen bestehenden Bauteilen, was einerseits den Wärmetransfer behindert und andererseits sehr stark die Korrosion fördert, da im Rauchgas enthaltenes HCl u. a. Stoffe, auch in den Überzügen enthalten ist und dort zur Chloridkorrosion des Stahls führt. Neben dem chemischen Angriff durch Korrosion gibt es durch die im Rauchgas enthaltenen Stäube aber auch einen mechanischen Angriff durch Abrasion, wobei abrasiver Verschleiß auch beispielsweise bei Rostrandrohren durch das Verbrennungsgut selbst zustande kommen kann.

In Kraftwerken oder Müllverbrennungsanlagen müssen daher in den Kesselbereichen regelmäßig Bauteile wie Rohre oder Rohrbündel wegen abrasiven oder korrosiven Verschleißes ausgebaut und ersetzt werden, was in der Regel die temporäre Stillegung der gesamten Anlage bedeutet und pro Anlage jährlich Kosten in der Größenordnung von mehreren 100 TDM verursacht, verbunden mit einer nicht koordinierten Verfügbarkeit. Man hat bereits versucht, diesem Problem durch den Einsatz anderer Werkstoffe wie beispielsweise durch neuartige Nickellegierungen beizukommen, so beschreibt die EP 0 819 775 eine Nickel-Chrom-EisenLegierung mit einem reduzierten Gehalt an Niob, die eine gute Korrosionsbeständigkeit und Bearbeitbarkeit aufweisen soll. Aus der EP 0 928 658 ist eine Ni-Cr-Mo-Fe-Legierung bekannt, die auf Metallträger aufgeschweißt werden kann. Auch diese Legierung soll eine höhere Korrosionsbeständigkeit als die üblichen Legierungen aufweisen. Eine weitere Ni-Cr-Co-Legierung mit erhöhter Korrosionsbeständigkeit wird in der PCT-Anmeldung Wo97/43457 beschrieben. Dokumente US 5 660 705 und EP 0913501 beschreiben Reparaturverfahren für Wasser-und Wasserdampfführende Rohre, wobei sich die Länge der Reparaturschicht nur über einen bestimmten Bereich um die zu reparierende Stelle des Rohres erstreckt. Zur Reparatur von Metallrohren mit Verschleißstellen beschreibt die EP 0 729 522 den galvanischen Auftrag auf die Innenwand eines solchen Rohres von handelsüblichen Legierungen beispielsweise auf der Basis von Nickel, Chrom, Kupfer oder Eisen. Repariert werden können auf diese Weise Verschleißstellen in Rohren mit einem typischen Durchmesser zwischen 10 bis 50 mm, wobei die Reparaturstellen etwa 5 bis 900 mm lang sein können. Außerdem muß die galvanisch aufgetragene Reparaturlegierung bestimmten Bedingungen hinsichtlich Schichtdicke und Zwillingskomgrenzen genügen. Aus der PCT-Anmeldung WO98/09751 sind weiterhin Rohre für Verbrennungsanlagen bekannt, die aus einer inneren Rohrkomponente aus bestimmten Stahllegierungen und einer äußeren Komponente aus einer speziellen Ni-Cr-Mo-Nb-Fe-Legierung bestehen, wobei die beiden Komponenten über eine metallurgische Bindung, insbesondere durch das Osprey-Verfahren zusammengehalten werden.

Die in den Veröffentlichungen vorgeschlagenen Speziallegierungen sind verhältnismäßig teuer, so daß sie in der Praxis kaum zur Anwendung gekommen sind. Nur das beispielsweise auch in der EP 0 729 522 beschriebene Auftragschweißverfahren, das auch als "Cladding" bezeichnet wird, hat in der Praxis einige Anwendungen gefunden, aber es hat sich herausgestellt, daß die Standzeiten nur bedingt in dem erhofften Maße verbessert werden können, zudem ein Verschweißen von Bögen und Geradrohren erforderlich wird.

Die DE 198 31 173 betrifft ein Verfahren bei dem eine zwei- oder mehrlagige Schicht auf Rohre oder Rohrbündel aufgespritzt und nachträglich eingesintert wird.

Die DE 3519 438 offenbart ein Verfahren bei dem eine Nickelschicht nach der Befestigung eines Rohres in einer Rohrplatte durch Aufweitung elektrolytisch vorgenommen wird.

Es besteht daher immer noch ein Bedürfnis nach Bauteilen für den Kesselbereich von Kraftwerken oder Müllverbrennungsanlagen u. ä., die eine deutlich höhere Beständigkeit gegen korrosiven oder abrasiven Verschleiß aufweisen und in einem Fertigungsgang ohne zusätzliche Schweißnähte hergestellt werden können.

Zur Lösung der Aufgabe werden Bauteile für den Kesselbereich von Kraftwerken oder Müllverbrennungsanlagen, insbesondere Rohre und Rohrbündel, bestehend aus Stahl oder Stahllegierungen vorgeschlagen, die gekennzeichnet sind durch eine einzige durchgehende äußere, galvanisch aufgetragene Schicht aus Nickel bzw. Nickellegierungen mit einer Schichtstärke von etwa 1 bis 5 mm, vorzugsweise 1 bis 2,5 mm.

Völlig überraschend wurde jetzt festgestellt, daß eine durchgehende äußere, galvanisch aufgetragene Schicht aus Reinnickel bzw. Nickellegierungen, insbesondere Ni-Co-Legierungen mit einer relativ geringen Schichtstärke von etwa 1 bis 2,5 mm ausreicht, um die Standzeiten solcher Bauteile zu vervielfachen. Offensichtlich verhindert eine solche galvanisch aufgetragene Nickelbeschichtung nicht nur abrasiven Verschleiß in allen Temperaturbereichen, sondern völlig überraschend wird dadurch im mittleren Temperaturbereich auch das Absetzen von Flugstäuben auf den Bauteilen und die dadurch bedingte Chloridkorrosion weitgehend verhindert. Versuche in einer Müllverbrennungsanlage haben gezeigt, daß die Abzehrungsrate bei den erfindungsgemäß behandelten Rohren praktisch gleich null im Vergleich zu ungeschützten Rohren war, die im gleichen Einsatzzeitraum an gleichem Ort eine Abzehrung von bis zu 1,5 mm innerhalb von 1/4 Jahr aufwiesen. Da sich an der Oberfläche der Rohre kaum Stäube festgesetzt hatten, läßt sich in die Zukunft ausgerichtet auch einen erheblich geringeren Reinigungsaufwand erwarten.

Das Vernickeln gehört zu den ältesten Verfahren der Galvanotechnik und wird seit langem in verschiedenen Varianten eingesetzt. Das zu galvanisierende Bauteil aus Stahl oder Stahllegierungen wird dabei als Kathode geschaltet; beim Vernickeln wird als Anodenmaterial in der Regel kein Elektrolytnickel eingesetzt, da sich dies wegen der Passivisierung nur in bestimmten Elektrolyten auflösen würde. In der Regel wird mit einer Mischung aus Nickelsulfat und geringen Mengen Nickelchlorid sowie Borsäure oder Zitronensäure gearbeitet. Die anwendbaren Verfahren sind Stand der Technik und dem Fachmann bekannt.

Die galvanisch aufgetragene Außenbeschichtung kann aus Reinnickel bestehen oder - je nach Temperatur- und anderen Umgebungsanforderungen - auch aus Nickellegierungen; für z.B. Rostrandrohre wird der Einsatz einer Ni-Co-Legierung wegen ihrer größeren Verschleißfestigkeit bevorzugt. Desgl. können auch Ni-Mo, Ni-P oder Legierungen mit einem gewissen Gehalt an seltenen Erdmetallen für bestimmte Zwecke zum Einsatz kommen.

Die Vernickelung kann nicht nur an Rohren und Rohrbündeln, sondern auch an anderen Anlageteilen wie Heizschlangen, Flossenwänden, Membranwänden usw. durchgeführt werden.

Die Vemickelung ist ein Verfahren, das einen weitgehend spannungsfreien Auftrag ermöglicht. Es ist sogar möglich, bei Bedarf Anlagenteile durch Schweißen zu verbinden ohne daß die Vemickelung dabei beschädigt wird.

Der besondere Vorteil der Erfindung liegt allerdings darin, daß die Standzeiten der beanspruchten Bauteile im Kesselbereich vervielfacht werden können und dadurch die sonst unvermeidlichen Abschaltungen ebenfalls stark reduziert werden und Stillstände planbarer werden. Über die Höhe der Kostenreduzierung kann wie im Falle einer 320.000 Tonnen Anlage wie z.B. Rugenberger Damm mit zwei Kesseln (je Kessel 160.000 Tonnen) noch keine direkte Aussage gemacht werden, da hierfür Erfahrungswerte fehlen. Es wird jedoch angenommen, daß sich der erhöhte Preis durch die Vemickelung bereits nach > 2 Jahren amortisiert hat. Es wird mit einer Lebensdauerverbesserung von mindestens 8 - 10 Jahren gerechnet.

Darüber hinaus hat sich bei Versuchen gezeigt dass die vorteilhaften Bauteile eine erweiterte Wirkung aufweisen, die sich darin äußert, dass die Bauteile im besonderen Maße von den sich sonst üblicherweise ablagernden Partikeln freibleiben oder diese Partikel im wesentlichen an den Bauteilen nicht sehr anhaften. In der Fachsprache wird die erzielte besondere Wirkung auch mit dem sogenannten Lotusblüteneffekt bezeichnet.

Des weiteren hat sich herausgestellt, dass mit der bevorzugten Art der besonderen Beschichtung der Wirkungsgrad eines Kraftwerks oder einer Müllverbrennungs-anlage aufgrund des besseren Wärmeübergangs infolge eingehaltener Bauteile entscheidend verbessert werden kann. Weiterhin kann infolge des verbesserten Wirkungsgrades die Gesamtheizleistung verringert und somit der Ausstoß an dem umweltschädlichen CO₂-Gas deutlich vermindert werden.

## Patentansprüche

1. Bauteile für den Kesselbereich von Kraftwerken oder Müllverbrennungsanlagen, insbesondere Rohre und Rohrbündel, Flossen- und Membranwände, bestehens aus Stahl bzw. Stahllegierungen, **gekennzeichnet durch** eine einzige durchgehende geschlossene äußere, galvanisch aufgetragene Schicht aus Nickel bzw. Nickellegierungen mit einer Schichtstärke von etwa 1 bis 5 mm.

2. Bauteile zur Gasleitung nach Anspruch 1, **dadurch gekennzeichnet, daß** die Schichtstärke der galvanisch aufgetragenen Schicht aus Nickel oder Nickellegierungen vorzugsweise zwischen 1 bis 2,5 mm liegt.

3. Bauteile zur Gasleitung nach einem der vorangehenden Ansprüche, **dadurch gekennzeichnet, daß** die äußere Beschichtung aus einer Ni-Co- oder Ni-Mo-Legierung besteht.

4. Bauteile zur Gasleitung nach den Ansprüchen 1 und 2, **dadurch gekennzeichnet, daß** die äußere Beschichtung aus Ni-P- oder NI-Si-Metall-Legierungen besteht.

5. Bauteile zur Gasleitung nach einem der vorangehenden Ansprüche, **dadurch gekennzeichnet, daß** die Schichtstärke der galvanisch aufgetragenen Schicht aus Nickel oder Nickellegierungen etwa 1,5 mm beträgt.

6. Bauteile zur Gasleitung nach einem der vorangehenden Ansprüche, **dadurch gekennzeichnet, daß** die Bauteile den sogenannten Lotusblüteneffekt aufweisen.

## Claims

1. Structural components for the boiler zone of power plants or waste incineration plants, in particular pipes and bundles of pipes, finned walls and membrane walls made of steel or steel alloys, **characterized by** one single continuously closed outer coating applied by electroplating and made of nickel or nickel alloys having a layer thickness of approximately 1 to 5 mm.

2. Structural components for conducting gas according to claim 1, **characterized in that** the layer thickness of the layer applied by electroplating and made of nickel or nickel alloys is preferably comprised between 1 and 2.5 mm.

3. Structural components for conducting gas according to one of the preceding claims, **characterized in that** the outer coating is made of a Ni Co or Ni Mo alloy.

4. Structural components for conducting gas according to the claims 1 and 2, **characterized in that** the outer coating is made of Ni P or Ni Si metal alloys.

5. Structural components for conducting gas according to one of the preceding claims, **characterized in that** the layer thickness of the layer applied by electroplating and made of nickel or nickel alloys is about 1.5 mm.

6. Structural components for conducting gas according to one of the preceding claims, **characterized in that** the components comprise the so called lotus blossom effect.

## Revendications

1. Composants destinés à la zone chaudière de centrales électriques ou d'installations d'incinération de déchets, notamment des tuyaux et des faisceaux de tuyaux, des parois ailetées et des parois membranes, fabriqués en acier ou en alliages d'acier, **caractérisé par** une seule couche extérieure continûment fermée et appliquée par galvanisation en nickel ou en alliages de nickel ayant une épaisseur de couche d'environ 1 à 5 mm.

2. Composants pour conduire du gaz selon la revendication 1, **caractérisé en ce que** l'épaisseur de couche de la couche en nickel ou en alliages de nickel appliquée par galvanisation est de préférence comprise entre 1 et 2,5 mm.

3. Composants pour conduire du gaz selon l'une des revendications précédentes, **caractérisé en ce que** le revêtement extérieur est composé d'un alliage Ni Co ou Ni Mo.

4. Composants pour conduire du gaz selon les revendications 1 et 2, **caractérisé en ce que** le revêtement extérieur est composé des alliages métalliques Ni P ou Ni Si.

5. Composants pour conduire du gaz selon l'une des revendications précédentes, **caractérisé en ce que** l'épaisseur de couche de la couche en nickel ou en alliages de nickel appliquée par galvanisation est environ 1,5 mm.

6. Composants pour conduire du gaz selon l'une des revendications précédentes, **caractérisé en ce que** les composants comprennent le soi-disant effet fleur de lotus.
